# EUROPÄISCHE PATENTSCHRIFT

(11) **EP 3 286 054 B1**
(45) Veröffentlichungstag und Bekanntmachung des Hinweises auf die Patenterteilung: **30.10.2019**
(21) Anmeldenummer: 16717381.4
(22) Anmeldetag: 20.04.2016
(51) Int. Cl.: B60T 13/58, B60T 15/20

(54) **HYDRAULISCH BETÄTIGBARE PNEUMATIKVENTILEINRICHTUNG**
HYDRAULICALLY ACTUATABLE PNEUMATIC VALVE MECHANISM
DISPOSITIF SOUPAPE PNEUMATIQUE ACTIONNABLE HYDRAULIQUEMENT

(30) Priorität: 22.04.2015 DE 102015106172
(43) Veröffentlichungstag der Anmeldung: 28.02.2018
(73) Patentinhaber: KNORR-BREMSE Systeme für Nutzfahrzeuge GmbH, 80809 München (DE)
(72) Erfinder: RIZZI, Stefano, 20035 Lissone (IT); BETTI, Gabriele, 20033 Desio (IT)
(86) Internationale Anmeldenummer: PCT/EP2016/058728
(87) Internationale Veröffentlichungsnummer: WO 2016/169966

(56) Entgegenhaltungen:
- DE-C- 685 881
- FR-A- 1 076 075
- FR-A- 1 431 274
- US-A- 3 712 340

## Beschreibung

Die vorliegende Erfindung betrifft eine hydraulisch betätigbare Pneumatikventileinrichtung mit wenigstens einem Hydraulikanschluss und mit wenigstens einem Druckluftanschluss.

Aus dem Stand der Technik sind bereits hydraulisch betätigbare Pneumatikventileinrichtungen, insbesondere für Nutzfahrzeuge und landwirtschaftlich genutzte Fahrzeuge bekannt.

Dabei wird hydraulisches Fluid (z.B. Hydrauliköl) zur Ansteuerung der Pneumatikventileinrichtung genutzt, mittels derer z.B. die Anhängerbremse eines Nutzfahrzeugs oder eines landwirtschaftlich genutzten Fahrzeuges angesteuert wird. Als hydraulisches Fluid kann beispielsweise Hydrauliköl verwendet werden, wie es üblicherweise im Nutzfahrzeugbereich verwendet wird. Denkbar ist beispielsweise, dass als hydraulisches Fluid Bremsflüssigkeit oder Hydrauliköl, das auch eine Schmierfunktion realisiert, verwendet wird.

Aus der US 3,650,568 A ist beispielsweise ein Bremssystem bekannt, das ein pneumatisch angesteuertes Hydraulikventil für ein landwirtschaftlich genutztes Fahrzeug aufweist.

Aus der US 2002/0030170 A1 ist ebenfalls ein pneumatisch betätigtes Hydraulikventil bekannt.

Aus der DEC685881 ist ein hydraulisch betätigbares Bremsventil für pneumatisch gebremste Anhänger in Triebwagenzügen bekannt.

Aus der WO 98/32640 A1 ist ein Absperrventil für ein pneumatisch betriebenes Fahrzeugbremssystem bekannt.

Aus der DE 1 655 075 A1 ist eine pneumatische Anhängerbremse für landwirtschaftlich genutzte Fahrzeuge bekannt, die zudem hydraulisch betätigbar ist. Aus der US 3,712,340 ist ein pneumatisches Anhängerbremssystem für landwirtschaftlich genutzte Fahrzeuge bekannt, wobei das Relaisventil des Anhängers hydraulisch ansteuerbar ist.

Das Anhängersteuerventil muss sicherstellen, dass der Bremsvorgang des Anhängers entsprechend dem angelegten hydraulischen Steuerdruck erfolgt. Darüber hinaus muss das Anhängersteuerventil auch eine kontinuierliche Druckluftversorgung des Anhängers und der dort vorhandenen Druckluftspeicher sicherstellen.

Es ist die Aufgabe der vorliegenden Erfindung, eine hydraulisch betätigbare Pneumatikventileinrichtung der eingangs genannten Art in vorteilhafter Weise weiterzubilden, insbesondere dahingehend, dass die proportionale Übersetzung des anliegenden hydraulischen Steuerdrucks zum anliegenden Druck der Druckluft einfach und zuverlässig gewährleistet werden kann.

Diese Aufgabe wird erfindungsgemäß gelöst durch eine hydraulisch betätigbare Pneumatikventileinrichtung mit den Merkmalen des Anspruchs 1. Danach ist vorgesehen, dass eine hydraulisch betätigbare Pneumatikventileinrichtung wenigstens einen Hydraulikanschluss und wenigstens einen Druckluftanschluss aufweist, weiter wenigstens einen Druckluftauslass, wenigstens einen Übertragungshebel, der mittels des Hydraulikanschlusses betätigbar ist, so dass die ausströmende Druckluft aus dem Druckluftauslass einstellbar ist, wobei ein Betätigungskolben vorgesehen ist, der hydraulisch durch den Hydraulikanschluss betätigbar ist, wobei der Betätigungskolben in einem beweglichen Gehäuseteil geführt ist.

Die Erfindung basiert auf dem Grundgedanken, dass der anliegende hydraulische Steuerdruck mechanisch derart übersetzt wird, dass ein proportionaler Druck im Druckluftauslass für die ausströmende Druckluft aus dem Pneumatikventil eingestellt werden kann. Durch die Führung des Betätigungskolbens in einem beweglichen Gehäuseteil wird es möglich, die Einwirkung des Betätigungskolbens auf den Übertragungshebel einzustellen, so dass hierüber auch das Verhältnis der Übersetzung von hydraulischem Druck zu pneumatischem Druck eingestellt werden kann.

Als hydraulisches Fluid kann beispielsweise Hydrauliköl verwendet werden, wie es üblicherweise im Nutzfahrzeugbereich verwendet wird. Denkbar ist beispielsweise, dass als hydraulisches Fluid Bremsflüssigkeit oder Hydrauliköl, das auch eine Schmierfunktion realisiert, verwendet wird.

Bei der hydraulisch betätigbaren Pneumatikventileinrichtung kann es sich um ein Anhängersteuerventil bzw. Anhängersteuermodul handeln.

Die Pneumatikventileinrichtung kann vom Typ "hydraulic-over-air" sein.

Insbesondere kann es sich bei der Pneumatikventileinrichtung um eine Pneumatikventileinrichtung für ein landwirtschaftlich genutztes Zugfahrzeug, insbesondere um das Anhängersteuermodul eines landwirtschaftlich genutzten Zugfahrzeugs (z.B. Traktor) handeln.

Des Weiteren kann vorgesehen sein, dass durch Bewegung des beweglichen Gehäuseteils die Position des Betätigungskolbens derart relativ zum Übertragungshebel veränderbar ist, dass das Verhältnis von hydraulischem Eingangsdruck, der an dem wenigstens einen Hydraulikanschluss anliegt, und dem pneumatischen Ausgangsdruck, der am Druckluftauslass anliegt, einstellbar ist. Durch eine derartige Bewegung des beweglichen Gehäuseteils wird es möglich, einfach das Verhältnis von hydraulischem Eingangsdruck zum pneumatischen Ausgangsdruck einzustellen. Beispielsweise können die Übersetzungsverhältnisse zwischen 3:1 und 15:1 variieren. Grundsätzlich denkbar sind aber auch andere Übersetzungsverhältnisse.

Des Weiteren kann vorgesehen sein, dass der Betätigungskolben mit dem Übertragungshebel in direktem Kontakt steht. Dadurch wird ein einfacher Aufbau der Pneumatikventileinrichtung und der mechanischen Betätigung des Übertragungshebels ermöglicht.

Darüber hinaus ist denkbar, dass der Übertragungshebel eine Einsenkung aufweist, in der der Betätigungskolben geführt ist. Dadurch wird für die Betätigung des Übertragungshebels eine definierte Kontaktfläche bereitgestellt, die die mechanische Betätigung des Übertragungshebels definiert bzw. begrenzt.

Insbesondere kann vorgesehen sein, dass die Länge der Einsenkung den Verstellbereich für die Einstellung des Verhältnisses von hydraulischem Eingangsdruck, der an dem wenigstens einen Hydraulikanschluss anliegt und dem pneumatischen Ausgangsdruck, der an dem Druckluftauslass anliegt, begrenzt. Denkbar ist in diesem Zusammenhang insbesondere, dass das Gehäuseteil derart bewegt werden kann, dass der Betätigungskolben stets mit einer Betätigungsfläche in der Einsenkung geführt ist und durch die Positionierung von Betätigungskolben und Gehäuseteil relativ zur Einsenkung der Verstellbereich eingestellt wird. Über die Definition des Verstellbereichs wiederum wird sodann das Verhältnis von hydraulischem Eingangsdruck und pneumatischem Ausgangsdruck eingestellt.

Des Weiteren kann vorgesehen sein, dass die Pneumatikventileinrichtung weiter ein Absperrventil aufweist. Mittels des Absperrventils kann beispielsweise verhindert werden, dass die Druckluftspeicher des Anhängers eines landwirtschaftlichen Fahrzeugs wiederbefüllt werden im Fehlerfall, so dass das Bremssystem automatisch bremst.

Das Absperrventil kann zumindest teilweise durch den Übertragungshebel betätigbar sein. Dadurch wird es möglich, ein Verklemmen z.B. eines Kolbens des Absperrventils zu verhindern bzw. ein derartiges Verklemmen zu überwinden.

Das Absperrventil kann bei Betätigung durch den Übertragungshebel in direktem Kontakt mit dem Übertragungshebel stehen. Dadurch wird es möglich, einen einfachen Aufbau der Pneumatikventileinrichtung zu erreichen und auch die mechanische Fehleranfälligkeit zu reduzieren.

Das Absperrventil kann in eine Sperrposition überführbar sein, wenn die Kombination von Betätigungsbewegung durch den Betätigungshebel und die Verschlussbewegung eines Kolbens des Absperrventils durch fehlenden Druckanstieg im Druckluftauslass das Absperrventil schließt. Dadurch wird im Fehlerfall sichergestellt, dass z.B. eine Wiederbefüllung der Druckluftspeicher eines Anhängers eines landwirtschaftlichen Nutzfahrzeuges im Fehlerfall verhindert wird, so dass automatisch die Anhängerbremsen aktiviert werden können.

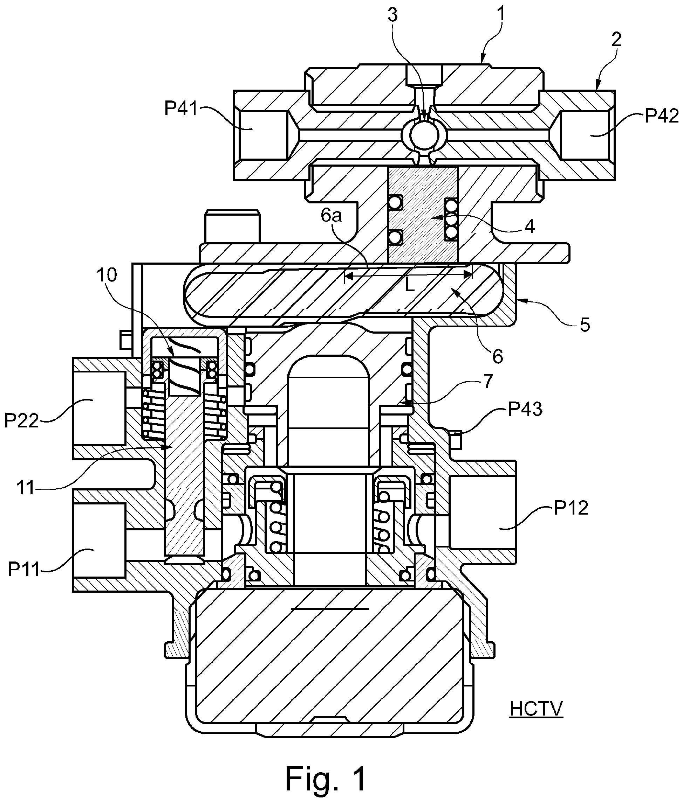

Weitere Einzelheiten und Vorteile der Erfindung sollen nun anhand eines in der Zeichnung dargestellten Ausführungsbeispiels näher erläutert werden.

Die einzige Figur zeigt in schematischer Schnittdarstellung ein Ausführungsbeispiel einer erfindungsgemäßen hydraulisch betätigbaren Pneumatikventileinrichtung.

Die hydraulisch betätigbare Pneumatikventileinrichtung HCTV weist ein Gehäuseteil 1 auf, in dem ein hydraulisches Ventil 2 vom Typ "Select-High" angeordnet ist. Grundsätzlich ist jedoch auch denkbar, dass anstelle eines Select-High-Ventils ein einfacher Hydraulikanschluss bzw. Hydrauliksteueranschluss vorgesehen sein kann. Denkbar ist auch, dass alternativ ein doppelter Hydrauliksteueranschluss mit zwei Steuereingängen vorgesehen ist. Grundsätzlich sind auch andere konstruktive Möglichkeiten denkbar.

Bei der Pneumatikventileinrichtung HCTV handelt es sich in diesem Ausführungsbeispiel um eine Pneumatikventileinrichtung vom Typ "hydraulic-over-air".

Die Pneumatikventileinrichtung HCTV ist hier das Anhängersteuerventil (bzw. Anhängersteuermodul) für ein landwirtschaftlich genutztes Fahrzeug, hier eines Traktors.

Das Select-High-Ventil 2 weist dabei einen ersten Hydraulikanschluss P41 und zweiten Hydraulikanschluss P42 auf.

Im "Select-High"- Ventil 2 ist weiter ein Steuerelement in Form einer Kugel 3 angeordnet, die je nach anliegendem Druck am Hydraulikanschluss P41 oder Hydraulikanschluss P42 den jeweils anderen Hydraulikanschluss sperrt.

Des Weiteren ist ein hydraulischer Kolben 4 als Betätigungskolben 4 vorgesehen, der im Gehäuseteil 1 beweglich geführt ist.

Im Gehäuse 5 ist ein Übertragungshebel 6 beweglich geführt und gelagert. Im Gehäuse 5 ist weiter ein Steuerkolben 7 geführt, der dem Pneumatikbereich der Pneumatikventileinrichtung HCTV zugeordnet ist.

Der Übertragungshebel 6 weist weiter eine Einsenkung 6a mit einer Länge L auf. Der Pneumatikbereich weist einen Druckluftanschluss P43 und einen Druckluftauslass P22 auf.

Des Weiteren ist eine Druckluftleitung mit einem Anschluss P11 und einem Ausgang P12 vorgesehen.

Des Weiteren weist die Pneumatikventileinrichtung ein Absperrventil 10 auf, das einen Kolben 11 aufweist.

Die Funktionsweise der hydraulisch betätigbaren Pneumatikventileinrichtung HCTV ist dabei wie folgt:
Die Pneumatikventileinrichtung HCTV, die hier gemäß Ausführungsbeispiel ein Anhängersteuermodul eines Traktors ist, muss das Bremsen des Anhängers des Traktors durch Bereitstellung eines pneumatischen Drucksignals am Ausgang P22 bereitstellen, das zum Anhänger durchgeschaltet wird und das proportional zum hydraulischen Druck am Eingang P41 oder P42 ist.

Darüber hinaus muss die Pneumatikventileinrichtung kontinuierlich den Anhänger mit Druckluft versorgen und zwar über den Druckluftanschluss P11 und den Druckluftausgang P12, wobei diese Druckluftleitung zu den Druckluftspeichern des Anhängers führt.

Das Druckluftniveau am Ausgang P22 muss stets proportional zum hydraulischen Druck sein, der durch das Anliegen von hydraulischem Druck an den Anschlüssen P41 und P42 der Pneumatikventileinrichtung HCTV anliegt. Da der hydraulische Druck, der für die Bremsen des Traktors benötigt wird, um ein Vielfaches höher ist, als der pneumatische Druck, um die vergleichbare bzw. selbe Bremskraft am Traktor und am Anhänger zu erzielen, wird eine Übersetzung vom hydraulischen Druck zum pneumatischen Druck benötigt. Die Übersetzungsverhältnisse können zwischen beispielsweise 3:1 und 15:1 variieren.

Um die ausströmende Druckluft aus dem Druckluftauslass P22 einzustellen, ist der Betätigungskolben 4 vorgesehen, der hydraulisch durch den Hydraulikanschluss P41 bzw. den Hydraulikanschluss P42 betätigt werden kann. Der Betätigungskolben 4 ist dabei in dem beweglichen Gehäuseteil 1 der hydraulisch betätigbaren Pneumatikventileinrichtung HCTV geführt.

Durch Bewegung des beweglichen Gehäuseteils kann die Position des Betätigungskolbens 4 derart relativ zum Übertragungshebel 6 verändert werden, dass das Verhältnis von hydraulischem Eingangsdruck der an dem Hydraulikanschluss P41 bzw. dem Hydraulikanschluss P42 anliegt, und dem pneumatischen Ausgangsdruck, der am Druckluftauslass P22 anliegt, eingestellt werden kann.

Der Betätigungskolben 4 steht dabei mit dem Übertragungshebel 6 in direktem Kontakt. Insbesondere interagiert der Betätigungskolben 4 unmittelbar mit dem Übertragungshebel 6.

Zur Einstellung des Verstellbereichs weist der Übertragungshebel 6 in einem möglichen Ausführungsbeispiel die Einsenkung 6a auf, in der der Betätigungskolben 4 geführt ist. Die Länge L der Einsenkung definiert dabei den Verstellbereich für die Einstellung des Verhältnisses von hydraulischem Eingangsdruck, der an dem Hydraulikanschluss P41 bzw. P42 anliegt, und dem pneumatischen Ausgangsdruck, der am Druckauslass P22 anliegt. Eine derartige Einsenkung beim Übertragungshebel 6 muss jedoch nicht zwangsläufig vorhanden sein, denkbar ist auch, dass die Einstellung des Verstellbereichs durch andere konstruktive Elemente wie beispielsweise Langlöcher oder Begrenzungsmittel oder Anschläge oder dergleichen realisiert wird.

Mittels des Absperrventils 10 kann sichergestellt werden, dass im Fehlerfall eine Pneumatikleitung abgesperrt wird. Dabei kann es sich beispielsweise um die Pneumatikleitung handeln, die bei einem Anhänger eines landwirtschaftlich genutzten Fahrzeuges normalerweise die Befüllung der Druckluftspeicher sicherstellt. Das Absperrventil 10 kann dabei in eine Absperrposition überführt werden, wenn die Kombination von Betätigungsbewegung durch den Betätigungshebel 6 und der Verschlussbewegung des Kolbens 11 des Absperrventils 10 durch fehlenden Druckanstieg im Druckauslass P22 das Absperrventil 10 schließen lässt.

Dadurch wird verhindert, dass die Druckluftspeicher des Anhängers von P11 nach P12 im Fehlerfall weiter mit Druckluft versorgt werden, wodurch eine automatische Bremsung des Anhängers erfolgt.

Das Absperrventil 10 kann zumindest teilweise durch den Übertragungshebel 6 betätigt werden. Dabei steht das Absperrventil 10 bei der Betätigung in direktem Kontakt mit dem Übertragungshebel 6 und wird somit durch diesen unmittelbar betätigt.

## Patentansprüche

1. Hydraulisch betätigbare Pneumatikventileinrichtung (HCTV) mit wenigstens einem Hydraulikanschluss (P41, P42) und mit wenigstens einem Druckluftanschluss (P43), wenigstens einem Druckluftauslass (P22), mit wenigstens einem Übertragungshebel (6), der mittels des Hydraulikanschlusses betätigbar ist, so dass die ausströmende Druckluft aus dem Druckluftauslass (P22) einstellbar ist, wobei ein Betätigungskolben (4) vorgesehen ist, der hydraulisch durch den Hydraulikanschluss (P41, P42) betätigbar ist und **dadurch gekennzeichnet, dass** der Betätigungskolben (4) in einem beweglichen Gehäuseteil (1) geführt ist, wodurch eine Einwirkung des Betätigungskolbens (4) auf den Übertragungshebel (6) derart einstellbar ist, dass hierüber ein Verhältnis einer Übersetzung von hydraulischem Druck zu pneumatischem Druck einstellbar ist.

2. Pneumatikventileinrichtung (HCTV) nach Anspruch 1, **dadurch gekennzeichnet, dass** durch Bewegung des beweglichen Gehäuseteils (1) die Position des Betätigungskolbens (4) derart relativ zum Übertragungshebel (6) veränderbar ist, dass das Verhältnis von hydraulischem Eingangsdruck, der an dem wenigstens einen Hydraulikanschluss (P41, P42) anliegt, und dem pneumatischen Ausgangsdruck, der am Druckluftauslass (P22) anliegt, einstellbar ist.

3. Pneumatikventileinrichtung (HCTV) nach Anspruch 1 oder Anspruch 2, **dadurch gekennzeichnet, dass** der Betätigungskolben (4) mit dem Übertragungshebel (6) in direktem Kontakt steht.

4. Pneumatikventileinrichtung (HCTV) nach einem der vorhergehenden Ansprüche, **dadurch gekennzeichnet, dass** der Übertragungshebel (6) eine Einsenkung aufweist, in der der Betätigungskolben (4) geführt ist.

5. Pneumatikventileinrichtung (HCTV) nach Anspruch 4, **dadurch gekennzeichnet, dass** die Länge der Einsenkung den Verstellbereich für die Einstellung des Verhältnisses von hydraulischem Eingangsdruck, der an dem wenigstens einen Hydraulikanschluss (P41, P42) anliegt, und dem pneumatischen Ausgangsdruck, der am Druckluftauslass (P22) anliegt, begrenzt.

6. Pneumatikventileinrichtung (HCTV) nach einem der vorhergehenden Ansprüche, **dadurch gekennzeichnet, dass** die Pneumatikventileinrichtung (HCTV) weiter ein Absperrventil (10) aufweist.

7. Pneumatikventileinrichtung nach Anspruch 6, **dadurch gekennzeichnet, dass** das Absperrventil (10) zumindest teilweise durch den Übertragungshebel (6) betätigbar ist.

8. Pneumatikventileinrichtung (HCTV) nach Anspruch 7, **dadurch gekennzeichnet, dass** das Absperrventil (10) bei Betätigung durch den Übertragungshebel (6) in direktem Kontakt mit dem Übertragungshebel steht.

9. Pneumatikventileinrichtung (HCTV) nach Anspruch 7 oder Anspruch 8, **dadurch gekennzeichnet, dass** das Absperrventil (10) in eine Absperrposition überführbar ist, wenn die Kombination von Betätigungsbewegung durch den Betätigungshebel (6) und die Verschlussbewegung eines Kolbens (11) des Absperrventils (10) durch fehlenden Druckanstieg im Druckluftauslass (P22) das Absperrventil (10) schließt.

## Claims

1. Hydraulically actuable pneumatic valve mechanism (HCTV) with at least one hydraulic connection (P41, P42) and with at least one compressed air connection (P43), with at least one compressed air outlet (P22), with at least one transmission lever (6) actuable by means of the hydraulic connection, so that the compressed air flowing out of the compressed air outlet (P22) is adjustable, wherein an actuating piston (4) is provided which can be actuated hydraulically by the hydraulic connection (P41, P42), and **characterised in that** the actuating piston (4) is is guided in a movable housing part (1), whereby an influence of the actuating piston (4) on the transmission lever (6) is adjustable in such a way that a ratio of hydraulic pressure to pneumatic pressure can be adjusted thereby.

2. Pneumatic valve mechanism (HCTV) according to claim 1, **characterised in that** the position of the actuating piston (4) can be changed relative to the transmission lever (6) by moving the movable housing part (1) in such a way that the ratio between the hydraulic input pressure applied to the at least one hydraulic connection (P41, P42) and the pneumatic output pressure applied to the compressed air outlet (P22) is adjustable.

3. Pneumatic valve mechanism (HCTV) according to claim 1 or claim 2, **characterised in that** the actuating piston (4) is in direct contact with the transmission lever (6).

4. Pneumatic valve mechanism (HCTV) according to any of the preceding claims, **characterised in that** the transmission lever (6) has a depression in which the actuating piston (4) is guided.

5. Pneumatic valve mechanism (HCTV) according to claim 4, **characterised in that** the length of the depression limits the adjustment range for the adjustment of the ratio between the hydraulic input pressure applied to the at least one hydraulic connection (P41, P42) and the pneumatic output pressure applied to the compressed air outlet (P22).

6. Pneumatic valve mechanism (HCTV) according to any of the preceding claims, **characterised in that** the pneumatic valve mechanism (HCTV) furthermore has a shut-off valve (10).

7. Pneumatic valve mechanism (HCTV) according to claim 6, **characterised in that** the shut-off valve (10) is at least partially actuable by the transmission lever (6).

8. Pneumatic valve mechanism (HCTV) according to claim 7, **characterised in that** the shut-off valve (10) is in direct contact with the transmission lever when being actuated by the transmission lever (6).

9. Pneumatic valve mechanism (HCTV) according to claim 7 or claim 8, **characterised in that** the shut-off valve (10) can be transferred into a shut-off position if the combination of the actuating movement by the actuating lever (6) and the closing movement of a piston (11) of the shut-off valve (10) because there is no pressure increase at the compressed air outlet (P22) closes the shut-off valve (10).

## Revendications

1. Dispositif (HCTV) de soupape pneumatique à actionnement hydraulique, comprenant au moins un raccord (P41, P42) hydraulique et comprenant au moins un raccord (P43) d'air comprimé, au moins une sortie (P22) d'air comprimé, comprenant au moins un levier (6) de transmission, qui peut être actionné au moyen du raccord hydraulique, de manière à pouvoir régler l'air comprimé sortant de la sortie (P22) d'air comprimé, dans lequel il est prévu un piston (4) d'actionnement, qui peut être actionné hydrauliquement par le raccord (P41, P42) hydraulique et **caractérisé en ce que** le piston (4) d'actionnement est guidé dans une partie (1) mobile formant boîtier, grâce à quoi un effet du piston (4) d'actionnement sur le levier (6) de transmission peut être réglé, de manière à pouvoir ainsi régler un rapport d'une transposition d'une pression hydraulique à une pression pneumatique.

2. Dispositif (HCTV) de soupape pneumatique suivant la revendication 1, **caractérisé en ce que**, par le déplacement de la partie (1) mobile formant boîtier, la position du piston (4) d'actionnement, par rapport au levier (6) de transmission, peut être transformée de manière à pouvoir régler le rapport de la pression hydraulique d'entrée, qui s'applique au au moins un raccord (P41, P42) hydraulique, à la pression pneumatique de sortie, qui s'applique à la sortie (P22) d'air comprimé.

3. Dispositif (HCTV) de soupape pneumatique suivant la revendication 1 ou la revendication 2, **caractérisé en ce que** le piston (4) d'actionnement est en contact direct avec le levier (6) de transmission.

4. Dispositif (HCTV) de soupape pneumatique suivant l'une des revendications précédentes, **caractérisé en ce que** le levier (6) de transmission a un renfoncement, dans lequel le piston (4) d'actionnement est guidé.

5. Dispositif (HCTV) de soupape pneumatique suivant la revendication 4, **caractérisé en ce que** la longueur du renfoncement limite la plage de déplacement pour le réglage du rapport de la pression hydraulique d'entrée, qui s'applique au au moins un raccord (P41, P42) hydraulique, à la pression pneumatique de sortie, qui s'applique à la sortie (P22) d'air comprimé.

6. Dispositif (HCTV) de soupape pneumatique suivant l'une des revendications précédentes, **caractérisé en ce que** le dispositif (HCTV) de soupape pneumatique a une soupape (10) d'arrêt.

7. Dispositif (HCTV) de soupape pneumatique suivant la revendication 6, **caractérisé en ce que** la soupape (10) d'arrêt peut être actionnée, au moins en partie, par le levier (6) de transmission.

8. Dispositif (HCTV) de soupape pneumatique suivant la revendication 7, **caractérisé en ce que** la soupape (10) d'arrêt est, lorsqu'elle est actionnée par le levier (6) de transmission, en contact direct avec le levier de transmission.

9. Dispositif (HCTV) de soupape pneumatique suivant la revendication 7 ou la revendication 8, **caractérisé en ce que** la soupape (10) d'arrêt peut passer dans une position d'arrêt, si la combinaison du déplacement d'actionnement par le levier (6) d'actionnement et du déplacement de fermeture d'un piston (11) de la soupape (10) d'arrêt par un défaut d'élévation de pression dans la sortie (P22) d'air comprimé, ferme la soupape (10) d'arrêt.
